# EUROPEAN PATENT SPECIFICATION

(11) **EP 3 327 396 B1**
(45) Date of publication and mention of the grant of the patent: **18.03.2020**
(21) Application number: 16830536.5
(22) Date of filing: 19.07.2016
(51) Int. Cl.: F28D 7/16, F28F 3/08, F02M 35/10, F02B 29/04, F28F 9/00, F28F 9/007, F28D 1/03, F28D 9/00, F28D 21/00

(54) **MOUNTING STRUCTURE FOR WATER-COOLED AIR COOLERS**
MONTAGESTRUKTUR FÜR WASSERGEKÜHLTE LUFTKÜHLER
STRUCTURE DE MONTAGE POUR REFROIDISSEURS D'AIR REFROIDIS À L'EAU

(30) Priority: 24.07.2015 JP 2015146340
(43) Date of publication of application: 30.05.2018
(73) Proprietor: T.RAD Co., Ltd., Shibuya-ku Tokyo 151-0053 (JP)
(72) Inventor: ONO, Jun, Tokyo 151-0053 (JP); KOMURO, Akira, Tokyo 151-0053 (JP); OKUBO, Atsushi, Tokyo 151-0053 (JP); SASAKI, Yoshihiko, Tokyo 151-0053 (JP); YOSHINO, Yasushi, Tokyo 151-0053 (JP)
(74) Representative: Mewburn Ellis LLP
(86) International application number: PCT/JP2016/071940
(87) International publication number: WO 2017/018431

(56) References cited:
- EP-A1- 1 830 048
- WO-A1-2004/036134
- WO-A1-2006/125919
- FR-A1- 2 989 771
- JP-A- H10 246 595
- JP-A- 2006 234 298
- JP-A- 2006 513 393
- JP-A- 2014 163 575
- JP-U- S 628 566

## Description

### Technical Field

The present invention relates to a mounting structure for water-cooled air coolers.

### Background Art

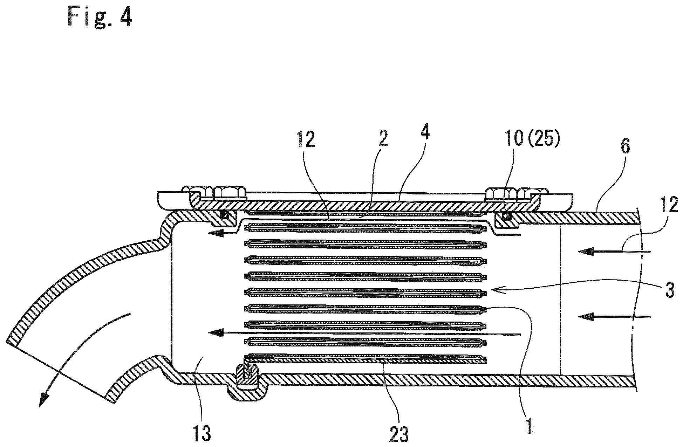

In a conventional water-cooled air cooler, as illustrated in Fig. 4, a core 3 is configured by layering a number of flat tubes 1 and forming air passages 2 between respective flat tubes 1. Then, at an end portion in a layer direction, an end cap 4 is mounted to form a main body of a cooler. Then, a core 3 is inserted into an opening of a casing 6, and the end cap 4 is fixed to the opening thereof.

At an opening edge of the casing 6, a circular groove 25 to which an 0 ring 10 for sealing is fitted is formed, and thus a thickness of the casing 6 at the opening edge is thicker by a thickness of the circular groove 25. Then, upon the cooling water being supplied into each flat tube 1, air 12 to be cooled is supplied into the air passage 2 between the flat tubes 1, and heat exchange is performed between the cooling water and the air.

WO2006/125919A1 discloses a heat exchanger comprising a heat exchanging bundle consisting of a stack of swaged plates arranged between a first end plate and a second end plate through which emerge inlet and outlet pipes of a coolant, and a housing which accommodates the bundle above its bottom wall. The housing is closed by the second end plate of the bundle comprising the inlet and outlet pipes of the coolant, thereby avoiding the use of a lid.

EP1830048A1 discloses a heat exchanger that has a strip, formed within the housing between two end chambers, which extends over a part of the length of the two end chambers. The other strip is provided between the other end chambers. The former strip is arranged on a wall of housing and the latter strip is arranged on the opposite wall of housing.

WO2004/036134A1 discloses a plate heat exchanger comprising a plurality of plates which are stacked against each other and which are of a first and second type in order to form flow channels for a first and second medium. The plates form a heat exchanger block with an upper side and a lower side and with two opposite side surfaces and front faces. The first flow channels are peripherally sealed for the first medium and are fluidically connected to distributor and collector channels which are arranged in a vertical position with respect to the plate plane and which lead into inlet and outlet connection pieces which are respectively arranged on the upper side and/or lower side. The second flow channels are open at the front surfaces thereof and are sealed at the side surfaces thereof. The open sides form an inlet and outlet plane for the second medium.

FR2989771A1 discloses a cover that has a wall to seal an opening used for introduction of a heat exchange bundle in a housing. The wall has a flat peripheral edge to authorize removable fixing of the cover on the housing. A mechanical reinforcement unit reinforces the wall. The reinforcement unit is configured to project outward from the housing, and includes mechanical reinforcement ribs e.g. large and small ribs that are formed by stamping the wall. Entire or portion of the large ribs is extended parallel according to the length of the cover.

### Citation List

### Patent Literature

PTL 1: Japanese Patent Laid-Open No.2014-98496

### Summary of Invention

### Technical Problem

However, in the vicinity of the end cap 4 in Fig. 4, it is hard for the air 12 to flow through the air passage 2 adjacent to the end cap 4. Therefore, an amount of heat exchange is decreased in the vicinity of the end cap 4, thereby causing a fault of reducing the amount of the heat exchange as a whole.

Accordingly, it is an object of the present invention to improve the flow of the air in the vicinity of the end cap 4.

### Solution to Problem

According to the present invention there is provided a mounting structure as specified in claim 1.

### Advantageous Effects of Invention

In a mounting structure of the present invention, since a leading end edge 5a of an opening portion 5 of the casing 6 in a depth direction and a bottom surface 4a of the end cap 4 are arranged to be flush with each other, or the bottom face 4a thereof is arranged more inside the casing 6 than the leading end edge 5a, the air can flow smoothly through an air passage 2 in the vicinity of the end cap 4, thereby promoting the heat exchange.

In the present invention, in the above-described configuration, in a case where an outer flange portion 7 is provided around four rims of the end cap 4, and a flat recessed portion 8 is formed from the flange portion 7 in a depth direction, the air can smoothly flow through the air passage 2 in the vicinity of the end cap 4 with a simple structure, thereby promoting the heat exchange.

**In the present invention,** in the above-described configuration, in a case where a thickness of the opening portion is formed to be thicker by a depth of the circular groove 25 for the O ring 10, and the bottom surface 4a protrudes inside the casing 6 by the entire thickness, the air can smoothly flow while securing the sealing property, thereby promoting the heat exchange.

### Brief Description of Drawings

Fig. 1 is a cross-sectional view illustrating a mounting structure for water-cooled air coolers of the present invention, and an arrow view taken along line II-II in Fig. 2.
Fig. 2 is an exploded perspective view of the mounting structure for water-cooled air coolers.
Fig. 3 is an arrow view taken along line III-III in Fig. 2.
Fig. 4 is a cross-sectional view illustrating a conventional mounting structure for water-cooled air coolers.

### Description of Embodiments

Subsequently, embodiments of the present invention will be described on the basis of the figures.

A water-cooled air cooler of the present invention has a structure in which a main body 26 of the cooler is inserted into a casing 6, and assembled thereto by an end cap mounted at an upper end of a main body.

In the main body 26, a core 3 is formed by a layered body of flat tubes 1 including a bulged portion 22 at one end thereof in a longitudinal direction, and an end cap 4 is arranged at a top end of the core 3 in a layer direction. The end cap 4 includes an outer flange portion 7 at its surrounding edge, and a flat recessed portion 8 from the outer flange portion 7 in a depth direction of the casing 6. At an outer rim of the outer flange portion 7, bolt holes 18 are drilled.

Subsequently, the flat tubes 1 are obtained by facing a pair of plates 1a with each other in an opposite direction.

Each plate 1a includes the bulged portion 22 at its one end in a longitudinal direction. A pair of connection holes 24 are formed in the bulged portion 22, and a partition portion 16 is provided at a middle of the each plate 1a in a width direction.

Note that, in this example, only one plate 1a is directly joined to a lower surface of the end cap 4 at an upper end position of the flat tube 1 in the layer direction. In a similar manner, only one plate 1a is also joined to a lower end plate 23 at a lower end in the layer direction.

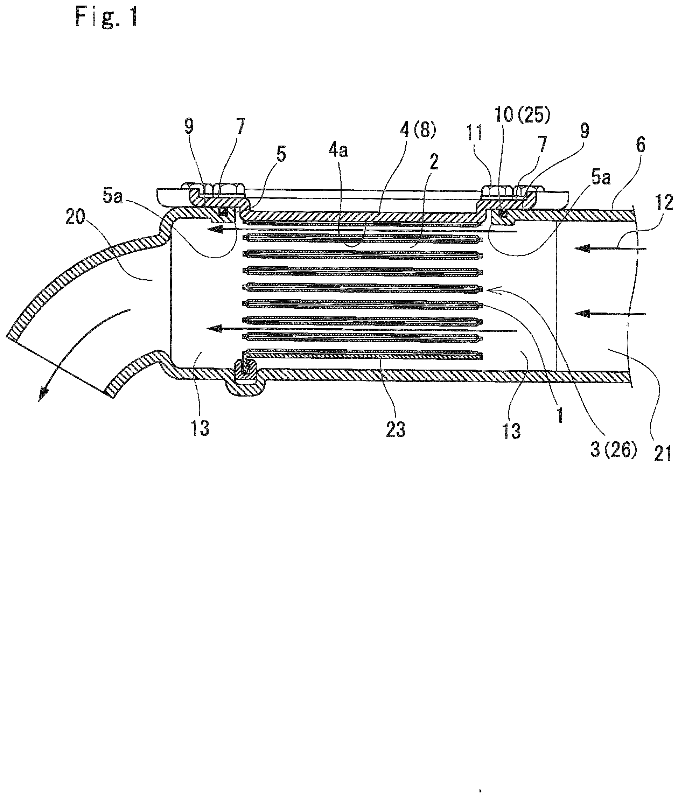

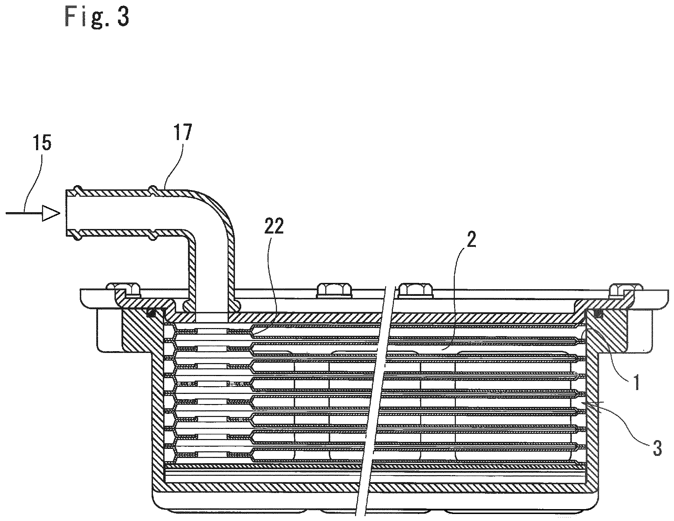

Then, each flat tube 1 is integrally brazed at the bulged portion 22 at the end portion in the longitudinal direction. As illustrated in Figs. 1 and 3, between outer surfaces of the respective flat tubes 1, the air passage 2 is formed.

The opening portion 5 is formed at an outer rim of the casing 6. The end cap 4 is fitted to the opening portion 5, and the core 3 is stored inside the casing 6. In this example, the lower end plate 23 located at the lower end of the flat tubes 1 in the layer direction is fitted to a groove portion provided at a bottom of the casing 6.

Note that the circular groove 25 is formed at an opening edge of the opening portion 5 of the casing 6, and the 0 ring 10 is fitted to the circular groove 25.

Then, the bolt hole 18 provided in the outer flange portion 7 is aligned with the bolt hole 18 provided in the casing 6, and a bolt 11 is screwed into the bolt hole 18 so as to unify the casing 6 and the main body 26.

At this time, the bottom surface 4a of the end cap 4 and a leading end edge 5a of the opening portion 5 are arranged to be flush with each other. The bottom surface 4a is located at the same position as a position where the circular groove 25 of the casing 6 is formed to have a thickness in the depth direction.

Therefore, the air 12 flown from an air manifold 13 on one side of the casing 6 flows smoothly through the air passage 2 adjacent to the bottom surface 4a without being disturbed by the leading end edge 5a of the opening portion 5.

In this example, the bottom surface 4a and the leading end edge 5a of the opening portion 5 are formed to be flush with each other. However, the bottom surface 4a illustrated in Fig. 1 may be located further lower.

Cooling water 15 is supplied via a cooling water manifold 14 to each flat tube 1 and the plate 1a. The cooling water 15 turns around the partition portion 16 and is led from one connection hole 24 to another connection hole 24. The heat exchange is performed between the cooling water 15 and the air 12.

Then, the cooled air 12 is led from the air manifold 13 of the casing 6 to an exit 20.

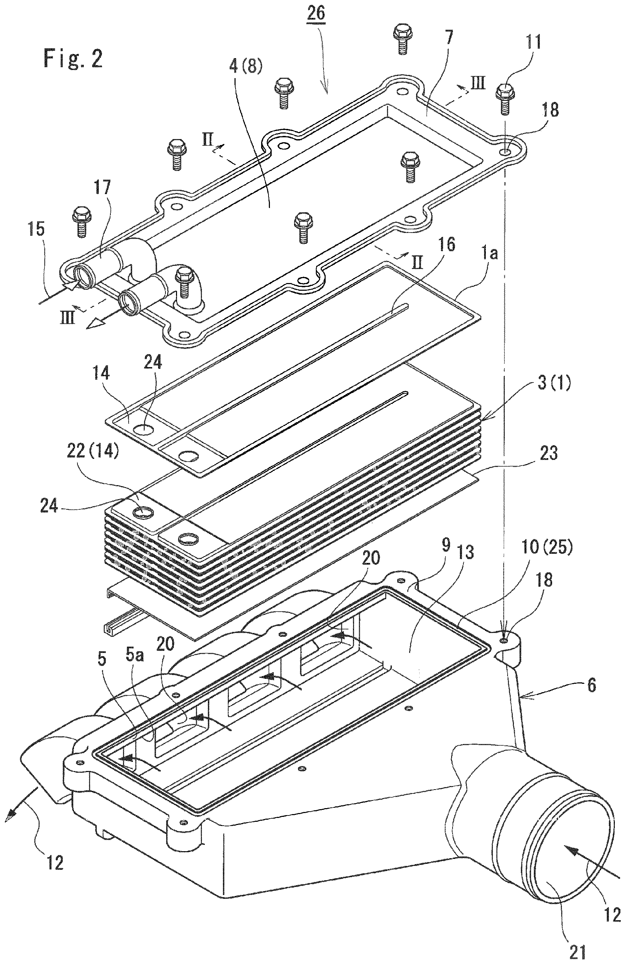

As illustrated in Fig. 2, in this example, the manifold on an entrance 21 side of the casing 6 is formed in a trapezoidal shape in a planner view and, a plurality of exits 20 is arranged via the partition portion on an exit side.

Further, in the above-described embodiment, nothing is provided in the air passage 2 between the respective layered flat tubes 1, but fins (corrugated fins, offset fins, or the like) may be provided in each air passage 2. As a consequence, cooling efficiency of the air can be improved. In this case, the fins are arranged to come into contact with the outer surface side of the flat tube, and integrally brazed in a furnace.

### Reference Signs List

- 1a: plate
- 2: air passage
- 3: core
- 4: end cap
- 4a: bottom surface
- 5: opening portion
- 5a: leading end edge
- 6: casing
- 7: outer flange portion
- 8: recessed portion
- 9: hole edge
- 10: 0 ring
- 11: bolt
- 12: air
- 13: air manifold
- 14: cooling water manifold
- 15: cooling water
- 16: partition portion
- 17: pipe
- 18: bolt hole
- 20: exit
- 21: entrance
- 22: bulged portion
- 23: lower end plate
- 24: connection hole
- 25: circular groove
- 26: main body

## Claims

1. A mounting structure for water-cooled air coolers wherein a plurality of flat tubes (1) is located in parallel with each other and an air passage (2) is arranged between the respective flat tubes (1) so as to form a core (3), and an end cap (4) is arranged at one end of the flat tubes (1) in a parallel direction so as to configure a main body (26) of a cooler, and in which
a casing (6) is included storing the core (3) inside and provided with an opening portion (5) at an outer rim, the opening portion (5) is fixedly covered with the end cap (4), and air to be cooled is led in parallel with a flat surface of the flat tube (1),
the water-cooled air cooler is arranged with a leading end edge (5a) of the opening portion (5) of the casing (6) in a depth direction and a bottom surface (4a) of the end cap (4) to be flush with each other, or the bottom surface (4a) is arranged more inside the casing (6) than the leading end edge (5a),
**characterised in that** the end cap (4) includes an outer flange portion (7) provided around four rims of the end cap (4), and a flat recessed portion (8) recessed and depressed from the outer flange portion (7) in the depth direction, and the outer flange portion (7) is formed to be fixed to a hole edge (9) of the opening portion (5), and
wherein in the hole edge on an outer surface side of the opening portion (5), a circular groove (25) to which an 0 ring (10) for sealing is fitted is formed, and a thickness of the opening portion (5) is formed to be thicker by a depth of the circular groove (25), and the bottom surface (4a) protrudes inside the casing (6) by at least the entire thickness of the circular groove (25).

## Patentansprüche

1. Befestigungsstruktur für wassergekühlte Luftkühler, wobei eine Vielzahl von Flachrohren (1) parallel zueinander angeordnet und ein Luftdurchlass (2) zwischen den entsprechenden Flachrohren (1) ausgebildet ist, um einen Kern (3) zu bilden, und eine Abschlusskappe (4) an einem Ende der Flachrohre (1) in paralleler Richtung angeordnet ist, um einen Hauptkörper (26) eines Kühlers auszubilden, und in welcher
ein Gehäuse (6) umfasst ist, in dessen Innerem der Kern (3) aufgenommen ist und das an einem Außenrand mit einem Öffnungsabschnitt (5) bereitgestellt ist, wobei der Öffnungsabschnitt (5) fest mit der Abschlusskappe (4) abgedeckt ist und zu kühlende Luft parallel zu einer flachen Oberfläche des Flachrohrs (1) geführt wird,
wobei der wassergekühlte Luftkühler so angeordnet ist, dass eine vordere Endkante (5a) des Öffnungsabschnitts (5) des Gehäuses (6) in Tiefenrichtung und eine Unterseite (4a) der Abschlusskappe (4) fluchtend miteinander ausgerichtet sind, oder dass die Unterseite (4a) weiter im Inneren des Gehäuses (6) angeordnet ist als die vordere Endkante (5a), **dadurch gekennzeichnet, dass**
die Abschlusskappe (4) einen Außenflanschabschnitt (7), der um die vier Ränder der Abschlusskappe (4) bereitgestellt ist, und einen flachen vertieften Abschnitt (8) umfasst, der von dem Außenflanschabschnitt (7) in Tiefenrichtung vertieft und abgesenkt ist, wobei der Außenflanschabschnitt (7) ausgebildet ist, um an einem Lochrand (9) des Öffnungsabschnitts (5) fixiert zu werden, und
wobei in dem Lochrand auf einer Außenseite des Öffnungsabschnitts (5) eine umlaufende Vertiefung (25) ausgebildet ist, in die ein O-Ring (10) zum Abdichten eingepasst ist, und eine Dicke des Öffnungsabschnitts (5) so ausgebildet ist, dass sie um eine Tiefe der umlaufenden Vertiefung (25) dicker ist, und die Unterseite (4a) im Inneren des Gehäuses (6) um zumindest die Gesamtdicke der umlaufenden Vertiefung (25) vorsteht.

## Revendications

1. Structure de montage pour refroidisseurs d'air refroidis par eau, dans laquelle une pluralité de tubes plats (1) sont positionnés parallèlement entre eux et un passage d'air (2) est agencé entre les tubes plats (1) respectifs afin de former un noyau (3), et un capuchon d'extrémité (4) est agencé au niveau d'une extrémité des tubes plats (1) dans une direction parallèle afin de configurer un corps principal (26) d'un refroidisseur, et dans laquelle :
un carter (6) est compris, stockant le noyau (3) à l'intérieur et prévu avec une partie d'ouverture (5) au niveau d'un bord externe, la partie d'ouverture (5) est recouverte de manière fixe avec le capuchon d'extrémité (4), et l'air à refroidir est conduit en parallèle avec une structure plate du tube plat (1),
le refroidisseur d'air refroidi par eau est agencé avec un bord d'extrémité d'attaque (5a) de la partie d'ouverture (5) du carter (6) dans une direction de profondeur et une surface inférieure (4a) du capuchon d'extrémité (4) pour être de niveau entre eux, ou la surface inférieure (4a) est agencée plus à l'intérieur du carter (6) que le bord d'extrémité d'attaque (5a),
**caractérisée en ce que** :
le capuchon d'extrémité (4) comprend une partie de bride externe (7) prévue autour de quatre bords du capuchon d'extrémité (4), et une partie évidée plate (8) évidée et enfoncée par rapport à la partie de bride externe (7) dans la direction de profondeur, et la partie de bride externe (7) est formée pour être fixée sur un bord de trou (9) de la partie d'ouverture (5), et
dans laquelle, dans le bord de trou sur un côté de surface externe de la partie d'ouverture (5), est formée une rainure circulaire (25) sur laquelle est monté un joint torique (10) pour l'étanchéité, et une épaisseur de la partie d'ouverture (5) est formée pour être plus épaisse selon une épaisseur de la rainure circulaire (25), et la surface inférieure (4a) fait saillie à l'intérieur du carter (6) selon au moins toute l'épaisseur de la rainure circulaire (25).
